# EUROPÄISCHE PATENTSCHRIFT

(11) **EP 3 545 737 B1**
(45) Veröffentlichungstag und Bekanntmachung des Hinweises auf die Patenterteilung: **01.09.2021**
(21) Anmeldenummer: 19000151.1
(22) Anmeldetag: 27.03.2019
(51) Int. Cl.: A01B 49/02, A01B 29/04

(54) **BODENBEARBEITUNGSGERÄT MIT WENIGSTENS EINER STRIEGELWALZENEINHEIT**
SOIL WORKING TOOL WITH AT LEAST ONE HARROW ROLLER UNIT
APPAREIL DE TRAITEMENT DU SOL POURVU D'AU MOINS UNE UNITÉ DE ROULEAU D'ÉTRILLAGE

(30) Priorität: 27.03.2018 DE 102018002497
(43) Veröffentlichungstag der Anmeldung: 02.10.2019
(73) Patentinhaber: Kerner Maschinenbau GmbH, 89344 Aislingen (DE)
(72) Erfinder: Kerner, Tobias, 89344 Aislingen (DE)
(74) Vertreter: Prünte, Peter

(56) Entgegenhaltungen:
- EP-A1- 1 300 060
- EP-A1- 2 589 283
- EP-A2- 0 704 147
- DE-A1-102012 016 348
- FR-A1- 3 009 919

## Beschreibung

Die Erfindung betrifft ein Bodenbearbeitungsgerät mit den Merkmalen des Oberbegriffs des Patentanspruchs 1.

In DE 44 39 441 A1 wird bereits eine Sämaschine in Verbindung mit einem Bodenbearbeitungsteil offenbart, das mit einer Striegelwalze, Scharstielen, Saatgutauslässen und Stützrädern über eine Einheit als ein erster Rahmen ohne Sägutbehälter ausgebildet ist, während der Sägutbehälter von einem zweiten, von dem ersten Rahmen unabhängigen Rahmen aufgenommen wird, der in sich fahrbar und mit dem Schlepper verbunden ist.

Aus EP 3 036 982 A1 ist eine Packerwalze mit einem Walzenkörper bekannt, der um seine Längsachse drehbar an einem Träger gelagert ist. Der Walzenkörper enthält mehrere, über den Umfang verteilte und parallel zur Längsachse verlaufende Leisten, die durch Federelemente radial nach außen gedrückt sind. EP2589283 A1 und EP 0704147 A2 offenbaren weiteren gattungsgemäßen Bodenbearbeitungsgeräte.

Es sind auch Bodenbearbeitungsgeräte bekannt, die mit nicht-zapfwellengetriebenen Zinken gefederter und ungefederter Bauart auf zwei und mehr im horizontal hintereinander gestaffeltem Abstand oder mit Zinken in mehr oder minder großem axialem Abstand zueinander angeordnet, aufgebaut sind. Im weiteren horizontalen Abstand zur letzten Zinkenreihe sind dahinter in der Regel am Boden ohne Fremdantrieb abrollende Krümler oder Ackerwalzen zur Tiefenführung, zur weiteren Bodenkrümelung, zur Einebnung und mehr oder weniger guten Bodenbefestigung angeordnet.

Die zunehmende mulchende Bodenbearbeitung mit in die Bodenoberzone einzuarbeitenden relativ großen Pflanzenmassen, überfordert diese Geräte durch Verstopfungen zwischen den Bodenbearbeitungszinken. Auch die gleichmäßige, lose Verteilung der organischen Masse an der Oberfläche, welche die Verrottung und das Absterben der Unkräuter bewirkt, wird mit diesen Maschinen nicht optimal erreicht. Könnte eine gute Verteilung dieser organischen Masse erreicht und könnten gleichzeitig die Verstopfungen weitgehend ausgeschaltet werden, wäre das Zinkengerät für die Praxis geradezu ideal, weil im Verhältnis zur zapfwellengetriebenen Bodenbearbeitungsmaschine billiger, wesentlich verschleißärmer, leichtzügiger, schlagkräftiger, mit erheblich größerer Flächenleistung, gewichtsleichter bei Kombination mit anderen Bodenbearbeitungsgeräten gearbeitet werden kann. Es sind auch größere Arbeitsbreiten möglich. Weil gezogene Zinkengeräte diese Forderungen auch nicht annähernd erfüllen konnten, fanden die heute weit verbreiteten Zapfwellen-Bodenbearbeitungsmaschinen so starken Eingang.

Es ist die Aufgabe der Erfindung, ein Bodenbearbeitungsgerät der eingangs genannten Art so zu verbessern, dass es Anhäufungen von Pflanzenresten vermeidet, die durch eine vorhergehende Bearbeitung des Bodens aus diesem herausgelöst wurden, und dass das Bodenbearbeitungsgerät diese Anhäufungen ohne Rückverfestigung und Vermischen mit Humus an der Bodenoberfläche ablegt. Hierdurch soll eine mechanische Unkrautbearbeitung erzielt werden.

Erfindungsgemäß wird diese Aufgabe dadurch gelöst, dass zur flächigen zerkrümelnden Bodenbearbeitung der wenigstens einen Striegelwalzeneinheit wenigstens eine Grubbereinheit mit einer Reihe sich drehender, scheibenförmiger Elemente in Bearbeitungsrichtung vorgeordnet ist.

Durch die Grubbereinheit wird hauptsächlich das Ziel der flachgründigen Grundbodenbearbeitung, insbesondere zur Saatbettbereitung, verfolgt, um den Boden so herzurichten, dass alle Saatkörner zügig keimen und dass die Krume bis zur Ernte ihre optimale Struktur beibehält. Da ein keimendes Korn Wasser, Wärme und Sauerstoff und der Keimling zusätzlich eine lockere Krume beim Durchstoßen der Oberfläche braucht, muss eine ideale Bodenbearbeitung darauf abzielen, dem Saatkorn einen leicht verfestigten Boden vorzubereiten, in dem das Wasser kapillar nach oben steigt und ein lockeres Krümelgemisch oberhalb des Saatkorns ein rasches Eindringen von Wärme und Sauerstoff in den Boden erlaubt. Von diesen pflanzenbaulichen Vorstellungen lassen sich für die Saatbettbereitung folgenden Aufgaben ableiten: das Einebnen der Oberflächen, das Zerkleinern und Krümeln von Kluten und Schollen, eine gleichmäßig tiefe Bearbeitung und ein Aufbrechen von Krusten.

Erfindungsgemäß ist das Bodenbearbeitungsgerät mit einer Grubbereinheit ausgestattet, die ihrerseits wenigstens eine Reihe sich drehender, scheibenförmiger Elemente umfasst. Hinter dieser wenigstens einen Reihe der scheibenförmigen Elemente, beispielsweise von Hohlscheiben oder Sternverteilern ist erfindungsgemäß eine Striegelwalzeneinheit mit einer Mehrzahl von nebeneinander angeordneten Striegelwalzen als Nachläufer vorgesehen.

Jede Striegelwalze umfasst zahlreiche Striegelzinken, die mit dem von dem Bodenbearbeitungsgerät und einem der Striegelwalze möglicherweise vorgeschalteten Einebnungswerkzeug derart zusammenwirken, dass mit Erdreich vermischtes organisches Material abgestreift und auf der Bodenoberfläche verteilt und lose liegen gelassen wird. Wenn die Striegelzinken im Betrieb mit der Erdoberfläche oder im Erdreich liegenden Steinen oder ähnlichen Hindernissen in Kontakt kommen, weichen sie elastisch aus. Aufgrund ihrer Elastizität gehen die Striegelzinken bei einem Kontakt mit festen Gegenständen wie Steinen nicht zu Bruch und werden auch nicht beschädigt; trotzdem ist ein einwandfreies und effektives Abstreifen des mit Erdreich vermischten organischen Materials, das durch die vorhergehende Bodenbearbeitung unregelmäßig aufgehäuft worden ist, sichergestellt. Dadurch wird auch verhindert, dass durch die in Bearbeitungsrichtung vorgeordnete Bodenbearbeitungseinheit im Rahmen des erfindungsgemäßen Bodenbearbeitungsgeräts vom Erdreich losgelösten Unkräuter haufenförmig auf dem Ackerboden liegenbleiben und in dem Haufen enthaltene Feuchtigkeit ein erneutes Weiterwachsen der Unkräuter ermöglichen kann.

Ebenso wird die Aufgabe der Egalisierung und gleichmäßigen Verteilung des vorauslaufenden Maschinenabschnitt bearbeiteten Bodenmaterials durch eine kompakte Anordnung der Striegelwalzeneinheit hinter einer Sternradreihe oder einer sonstigen Zustreicheinrichtung erreicht; dabei ist die Baulänge so kurz wie möglich ausgeführt, um die Gesamtmaschinenlänge gering zu halten.

Üblicherweise ist das Bodenbearbeitungsteil mit der angehängten Striegelwalzeneinheit über einen Rahmen als eine Einheit ausgebildet ist und mit dem Schlepper, z. B. der Dreipunktaufhängung des Schleppers, fest verbunden.

Zur Tiefenführung des Bodenbearbeitungsgeräts ist dieses vorzugsweise seitlich über Stützräder geführt, beispielsweise an beiden Seiten des Zinkenfelds.

Vorzugsweise ist die der Striegelwalzeneinheit vorgelagerte Sternradreihe oder ein anderes Einebnungswerkzeug, mit dieser hydraulisch oder mechanisch gemeinsam gegenüber dem Grubber oder einer Schareinheit ansteuerbar; alternativ ist die Striegelwalzeneinheit gesondert gegenüber der Sternradreihe hydraulisch oder mechanisch verstellbar. Die Sternradreihe ist vorzugsweise von dem Grubber trennbar angeordnet und gegenüber dem Grubber höhenverstellbar, um eine an die jeweilige Bodenart optimal angepasste Bearbeitung des Bodens zu ermöglichen. Der Grubber ist über eine Dreipunktaufhängung mit dem Schlepper verbunden.

Zwischen dem Rahmen der vorgelagerten Sternradreihe oder einer vorgelagerten Grubberwalzenreihe können elastische Elemente, beispielsweise aus Gummi, oder Federn, z. B. Schraub- oder Flachfedern, angeordnet sein, damit die Striegelwalzen elastisch gelagert sind und einen bestimmten, einstellbaren Druck auf das Bodenbearbeitungsteil ausüben, falls dies erwünscht ist. Die Striegelwalzeneinheit ist neben der Elastizität der einzelnen Striegel als ganze vorzugsweise zusätzlich elastisch gelagert, wozu einzelne elastische Elemente wie Bauteile aus Gummi oder Federn dienen.

Falls erforderlich, lassen sich seitlich der Reihe der Striegelwalzeneinheit zusätzliche, vorzugsweise federnd gelagerte, Stützräder anordnen, die ebenfalls vorzugsweise höhenverstellbar ausgeführt sind. Dadurch kann die Striegelwalzeneinheit auch als ganze beim Auftreffen auf einen größeren Stein oder ein entsprechendes Hindernis diesem Hindernis nach oben oder seitlich ausweichen, so dass dadurch die Striegelzinken nicht beschädigt werden, und dann, wenn das Hindernis den Bereich der Zinken verlassen hat, wieder in den Ausgangs- oder den Betriebszustand zurückkehren.

Ebenso wird mit Vorteil vorgesehen, dass die Striegelwalze über elastische Elemente, beispielsweise aus Gummi, auf einem Träger gelagert ist.

Vorteilhafte Weiterbildungen ergeben sich aus den Unteransprüchen.

Vorzugsweise dienen die scheibenförmigen Elemente als Einebnungswerkzeuge; dies ist insbesondere dann der Fall, wenn ihnen Flügelschare, Gänsefußschare oder Grubberzinken in Bearbeitungsrichtung vorgeordnet sind.

Wenn die scheibenförmigen Elemente Walzen sind, insbesondere Grubberwalzen oder Packerwalzen, haben diese auch die Funktion der Tiefenführung des Bodenbearbeitungsgeräts. Diese Funktion wird besonders dann erreicht, wenn sie hydraulisch oder mechanisch verstellbar sind.

Neben den Grubberwalzen und Packerwalzen gehören zu den scheibenförmigen Elementen auch Sternverteiler oder Hohlscheiben.

Um von sich drehenden scheibenförmigen Elementen, einer Grubberwalze oder einer diese umfassenden Grubbereinheit aufgewirbelte Erdklumpen abzufangen, wird zwischen der Grubbereinheit und der wenigstens einen Striegelwalzeneinheit mit Vorteil eine Prallstriegeleinheit angeordnet.

Zusätzlich kann aber auch nach der Prallstriegeleinheit noch eine weitere Reihe sich drehender, scheibenförmiger Elemente, insbesondere von Grubberwalzen oder Packerwalzen, angeordnet sein.

In einer besonders bevorzugten Ausgestaltung der Erfindung ist der wenigstens einen Striegelwalzeneinheit wenigstens ein Zinkengerät, insbesondere eine Anordnung von zwei Reihen Zinkenschare oder Gänsefußschare, vorgeordnet.

Dabei ist mit Vorteil zwischen den wenigstens zwei Reihen der Zinkenschare einerseits und der wenigstens einen Striegelwalzeneinheit andererseits wenigstens eine Reihe sich drehender scheibenförmigen Elemente, insbesondere von Grubberwalzen oder Packerwalzen, angeordnet. Geeignet ist auch eine Anordnung von bis zu sechs Reihen von Zinkenscharen.

Wenn die scheibenförmigen Elemente und/oder die wenigstens eine Striegelwalzeneinheit und/oder die Prallstriegeleinheit und/oder die Zinkenschare mechanisch oder hydraulisch tiefenverstellbar sind, wird eine optimale Anpassung des Bodenbearbeitungsgeräts an den jeweils zu bearbeitenden Boden erreicht.

In vorteilhafter Weise werden die Striegel von Wendelfedern, Gummifedern, Drehstabfedern, Spiralfedern oder Blattfedern gebildet, oder sie sind in anderer Weise als elastische Bauelemente ausgebildet.

Die Wendelfedern sind mit Vorteil so ausgestaltet, dass ihre freien Enden sich in radialer Richtung erstreckende Zinken sind.

Vorzugsweise sind die Halteelemente Leisten, auf denen die Striegel befestigt sind.

Mit Vorteil sind die Striegel auf die Leisten aufgesteckt oder mit den Leisten verschraubt oder verschweißt.

Wenn der Walzenkörper seitlich jeweils durch eine Scheibe begrenzt ist, sind die Striegel zwischen den Scheiben angeordnet, wobei die Zinken die Scheiben in radialer Richtung überragen. Durch den Einsatz der Scheiben ergibt sich ein einfacher und kompakter Aufbau der Striegelwalzen. Selbst wenn eine Wendelfeder gebrochen ist, lässt sie sich schnell austauschen, wenn wenigstens eine der Scheiben über Splinte gegenüber den Leisten fixiert ist, die die Wendelfedern tragen.

Die Striegelwalzeneinheit ist entweder eine einzige Walze mit einer Vielzahl von beispielsweise nur durch einzelne Scheiben getrennten Striegelkörper, die eine Mehrzahl von Walzenkörpern umfasst, wie sie oben beschrieben sind und die nebeneinander auf einem gemeinsamen Träger angeordnet sind, oder sie umfasst eine Mehrzahl von jeweils einzeln gelagerten Striegelwalzen mit zwischen jeweils zwei seitlichen Scheiben über den Kreisumfang angeordneten Striegeln.

Eine Striegelwalzeneinheit ist vorzugsweise dadurch gekennzeichnet, dass die Walzenkörper über Aufhängungen an einem Querträger befestigt sind.

Mit Vorteil ist der die Striegelwalzeneinheit tragende Querträger seinerseits über Träger mit einem Tragrahmen verbunden, der weitere Einheiten zur Bodenbearbeitung umfasst.

In vorteilhafter Weise ist der Querträger durch eine hydraulische oder eine mechanische Steuerung höhenverstellbar gegenüber dem Tragrahmen ausgebildet.

Die Striegelwalzeneinheit ist bevorzugt elastisch gegenüber dem Tragrahmen oder dem Querträger gelagert; dadurch wird die Elastizität der einzelnen Striegel der Striegelwalzen insgesamt unterstützt und die Wirkung der Unebenheiten des bearbeitenden Ackers auf das gesamte Bodenbearbeitungsgerät reduziert.

Gemäß der Erfindung lässt sich auch ein einteiliger Rahmen für die Bodenbearbeitungsvorrichtung und die Striegelwalzeneinheit vorsehen.

Die Striegelzinken weichen bei ihrem erfindungsgemäßen Einsatz in den Striegelwalzen beweglich aus, oder sie sind auslenkbar und selbstrückstellend oder zwangsrückstellend ausgebildet, so dass jede Striegelwalze selbst ihre Lage unverändert beibehält und lediglich die Zinken, die unmittelbar mit dem Hindernis in Kontakt kommen, ausgelenkt werden. Dies wird erfindungsgemäß mit Hilfe von Federn erreicht, die auf der Striegelwalzenwelle oder einem starr mit der Welle verbundenen Trägerarm befestigt sind, oder aber dadurch, dass an sich starre Zinken gelenkig mit der Welle oder dem Befestigungsarm verbunden sind, so dass durch die Rotation der Welle die Zinken durch Eigengewicht und/oder durch Rotationsenergie selbsttägig wieder in ihre Ausgangsstellung zurückkehren, wenn sie beim Auftreffen auf ein Hindernis um die Gelenkstelle ausweichen. Die Rotationsgeschwindigkeit der Striegelwalzenwelle mit den Striegelzinken ist vorzugsweise höher als die Fahrgeschwindigkeit der Gesamtanordnung, so dass die gelenkig mit den auf der Welle oder daran befestigten Flanschen oder Trägerarmen gelagerten Striegelzinken mit relativ hoher Drehzahl umlaufen und aufgrund des Eigengewichtes beim Auslenken eine rasche Rückstellung ergeben, wenn die Zinken selbst rückstellend gelagert sind. Im Falle einer Zwangsrückstellung der Zinken erfolgt die Rückstellung durch Federkraft, wobei beispielsweise Wendelfedern, Gummifedern, Drehstabfedern, Spiralfedern, Blattfedern usw. verwendet werden können, die ein Auslenken der Striegelzinken in ihrer Rotationsebene oder in Querrichtung hierzu ergeben. Die Striegelwalzen sind somit erfindungsgemäß als Wendelfedern, Gummifedern, Drehstabfedern, Spiralfedern, Blattfedern oder in anderer Weise als elastische Bauelemente ausgestaltet. Die Striegelzinken können auch unmittelbar an einem als Blattfeder ausgebildeten Befestigungsarm mit einer rotierenden Welle der Vorrichtung verbunden sein.

Eine weitere Variante der Erfindung ist darin zu sehen, dass die rotierende Welle der Striegelwalzeneinheit zusammen mit den Striegelwerkzeugen höhenbeweglich angeordnet ist, so dass die Werkzeuge bzw. Striegelzinken starr mit der Welle befestigt sein können und die Welle beim Auftreffen auf ein Hindernis höhenbeweglich im Rahmen geführt nach oben aus gelenkt werden kann sowie sich aufgrund des Eigengewichtes selbsttätig wieder abwärts in die Arbeitsposition bewegt, wenn der oder die Zinken wieder außer Eingriff mit dem Hindernis kommen. Eine derartige Führung der Welle kann mit dem Rahmen der Vorrichtung pendelnd verbunden sein.

Nachstehend wird die Erfindung in einem Ausführungsbeispiel anhand der Zeichnungen näher erläutert. Es zeigen:
- Fig. 1: ein als Grubber ausgeführtes Bodenbearbeitungsgerät mit einem Zinkenfeld, einer Sternradreihe und einer Striegelwalzeneinheit mit einer Mehrzahl von Striegelwalzen in isometrischer Ansicht,
- Fig. 2: das Bodenbearbeitungsgerät gemäß Figur 1 in Seitenansicht,
- Fig. 3: die Striegelwalzeneinheit gemäß Figuren 1, 2 in isometrischer Ansicht,
- Fig. 4: die Striegelwalzeneinheit in der Draufsicht,
- Fig. 5: eine einzelne Striegelwalze aus der Striegelwalzeneinheit gemäß Figuren 1 bis 4 mit beiden seitlichen Abdeckungen
- Fig. 6: die Striegelwalze gemäß Figur 5 mit abgenommener vorderseitiger Abdeckung
- Fig. 7: das Bodenbearbeitungsgerät gemäß Fig. 2 mit einer zusätzlichen Grubberwalze,
- Fig. 8: ein Bodenbearbeitungsgerät mit einer Grubbereinheit, die zwei Reihen sich drehender, scheibenförmiger Elemente umfasst, wobei hinter diesen eine Striegelwalzeneinheit angeordnet ist, und
- Fig. 9: das Bodenbearbeitungsgerät gemäß Fig. 8, wobei zusätzlich eine Packerwalze oder Grubberwalze zwischen den Reihen der scheibenförmigen Elemente einerseits und der Striegelwalzeneinheit andererseits vorgesehen ist.

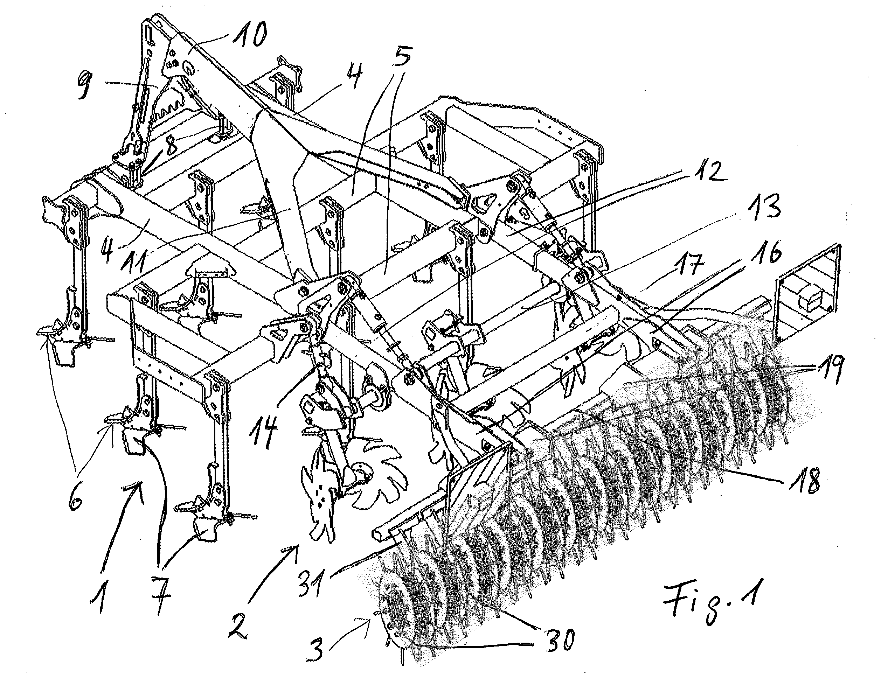

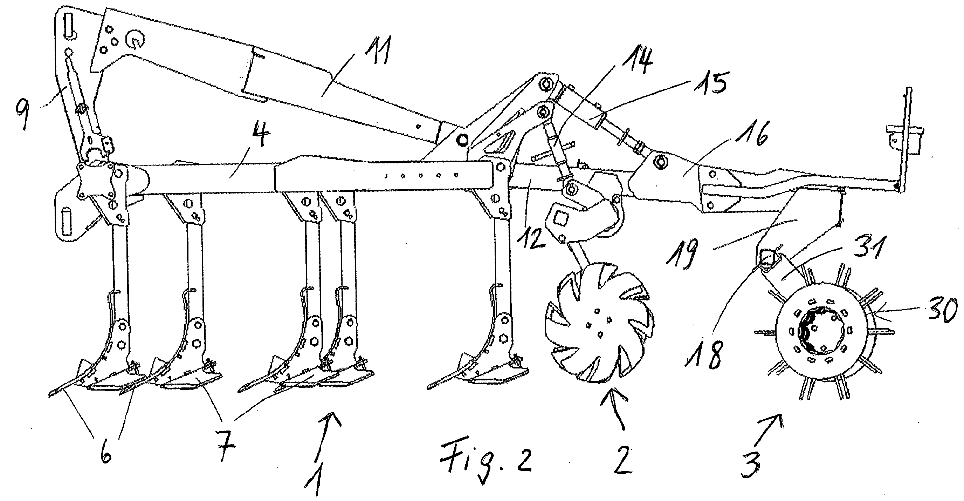

Ein als Grubber ausgebildetes Bodenbearbeitungsgerät umfasst ein Zinkenfeld 1 (Fig. 1, 2), eine dem Zinkenfeld 1 in Zugrichtung nachgeordnete Sternradreihe 2 oder eine andere Zustreicheinrichtung und eine der Sternradreihe in Zugrichtung nachgeordnete, eine Mehrzahl von Striegelwalzen 30 umfassende Striegelwalzeneinheit 3 für die Nivellierung oder Egalisierung Bodens nach einer Bodenbearbeitung durch das Zinkenfeld 1. Die in Fig. 1 dargestellten Striegelwalzen 30 der Striegelwalzeneinheit 3 sind jeweils leicht geneigt zur Zugrichtung des Bodenbearbeitungsgeräts angeordnet; in anderen, hier nicht dargestellten Ausführungsformen sind die Striegelwalzen in Zugrichtung angeordnet.

Das Zinkenfeld 1 weist in an sich bekannter Weise einen aus Längsprofilen 4 und Querprofilen 5 gebildeten Grubbertragrahmen mit mehreren an den Querprofilen 5 nebeneinander angeordneten Grubberzinken 6 in Verbindung mit Flügelscharen 7 auf. Bei der gezeigten Ausführung enthält der Grubbertragrahmen drei zueinander parallele Querprofile 5, an denen jeweils mehrere nebeneinander angeordnete Grubberzinken 6 befestigt sind.

An dem, in Zugrichtung gesehen, vorderen Ende des Grubbertragrahmens ist eine Aufhängung mit zwei unteren Aufhängungen 8 zum Ankoppeln zweier Unterlenker und einem durch zwei schräge Stützen 9 an den unteren Aufhängungen 8 abgestützten oberen Aufhängungsteil 10 zum Ankoppeln eines Oberlenkers einer Dreipunktaufhängung an einem Zugfahrzeug vorgesehen. Das obere Aufhängungsteil 10 ist neben den beiden Stützen 8 auch durch zwei schräg nach unten und zur Seite verlaufende Streben 11 innenseitig an den Längsprofilen 4 des Grubbertragrahmens abgestützt.

Die Sternradreihe 2 und die Striegelwalzeneinheit 3 sind an einem aus zwei zueinander parallelen Längsträgern 12 und einem Querträger 13 gebildeten Traggestell an dem Grubbertragrahmen angelenkt. Dabei ist die Sternradreihe 2 trennbar mit dem Traggestell durch Einstellelemente 14 in verschiedenen Höhen verbindbar.

Die Längsträger 12 sind mit ihrem einen Ende über hydraulische Vorrichtungen 15 an dem hinteren Querprofil 5 des Grubbertragrahmens angelenkt. An den freien Enden der beiden Längsträger 12 ist ein Tragrahmen mit Längsträgern 16 und einem Querträger 17 zur Aufnahme der Striegelwalzeneinheit 3 befestigt.

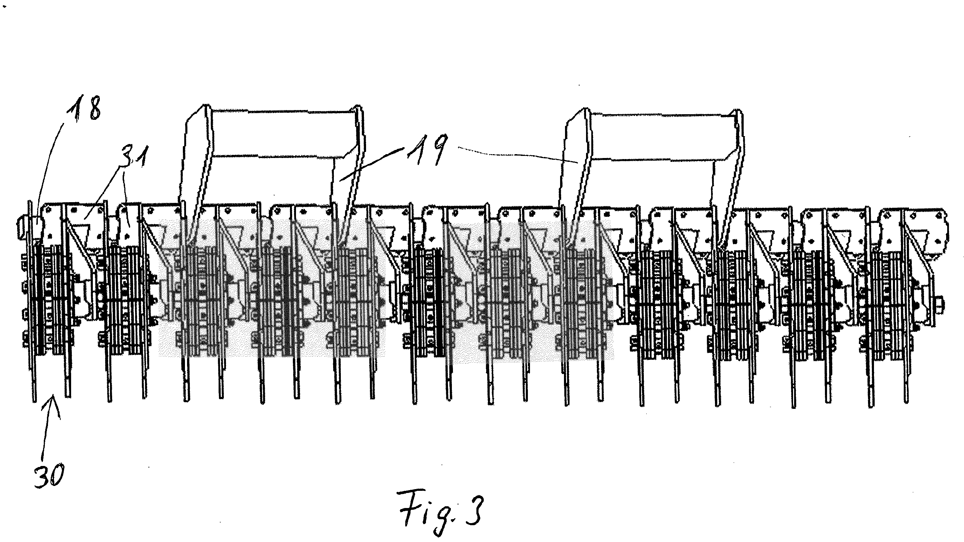

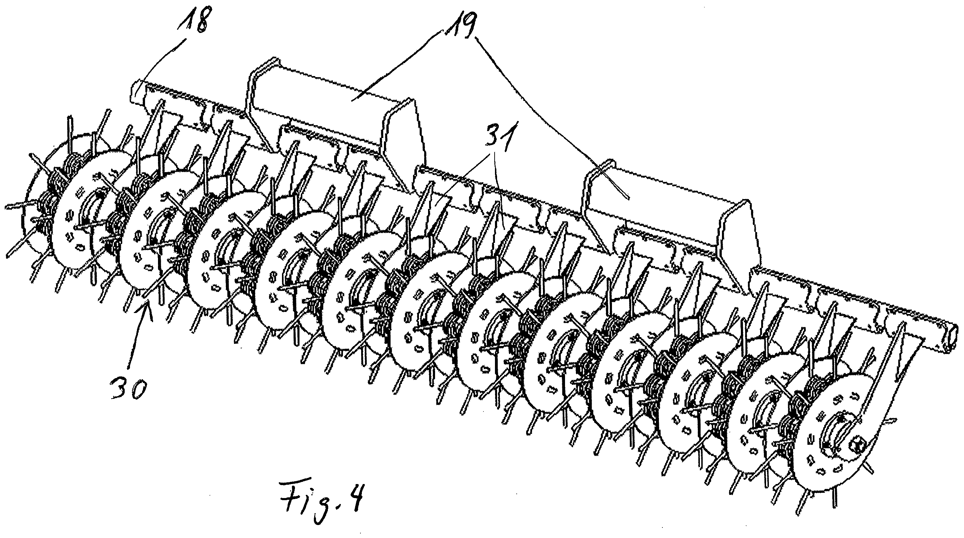

An einem Träger 18 sind die einzelnen Striegelwalzen 30 über Aufhängungen 31 (Fig. 3, 4) befestigt. Der Träger 18 ist seinerseits über Tragelemente 19 mit den hinteren Enden der Längsträger 16 verbunden.

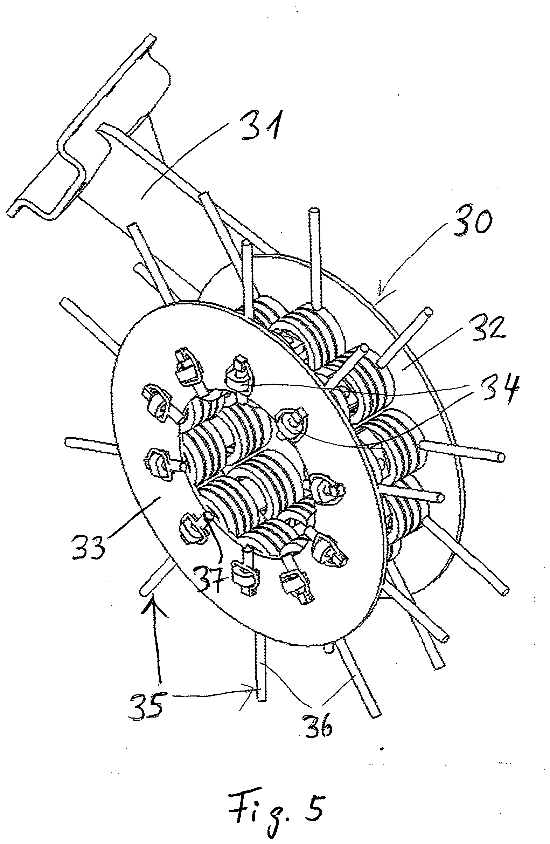

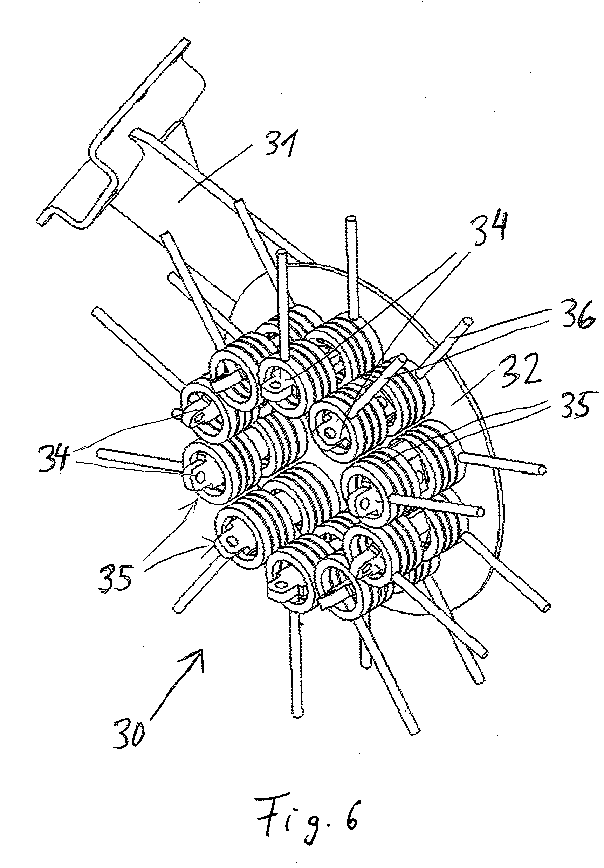

Die Striegelwalzen 30 sind an den freien Enden der Aufhängungen 31 drehbar gelagert. Sie umfassen zwei seitliche Scheiben 32, 33 als Abdeckungen. An der Scheibe 32 sind parallel zur Längsachse der Striegelwalze 30 in gleichem Abstand zueinander verlaufende Leisten 34 (Fig. 5, 6) befestigt, beispielsweise verschweißt. Die Leisten 34 tragen ihrerseits jeweils einen Striegel 35.

Die Striegel 35 werden von einer oder von jeweils zwei nebeneinander auf den Leisten 34 aufgeschobenen und mit diesen vorzugsweise verschraubten Wendelfedern 35 gebildet, an deren freien Enden jeweils Zinken 36 in radialer Richtung über den Umfang der Scheiben 32, 33 hinausragen. Die Leisten 34 ragen durch die von den Wendelfedern 35 gebildeten Wendeln hindurch, bilden an einem ihrer Enden ihrerseits Laschen, die durch die abnehmbare Scheibe 33 hindurchragen und sind mittels Splinten 37 gegenüber der Scheibe 33 fixiert.

Anstelle der Wendelfedern 35 lassen sich auch Spiralfedern, Drehstabfedern, Gummifedern oder dergleichen vorsehen. Das Federsystem ist selbstrückstellend, so dass die Zinken 36 bei einer Auslenkung selbsttätig in die Ausgangsposition zurückkehren.

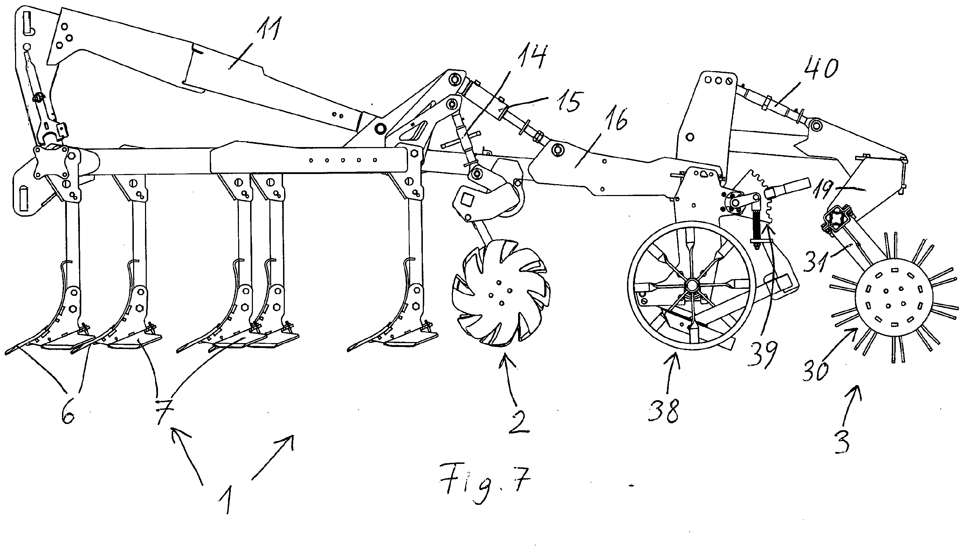

In einem mit der in Fig. 2 dargestellten Ausführungsform vergleichbaren Bodenbearbeitungsgerät (Fig. 7) ist zusätzlich zwischen der Sternradreihe 2 und der Striegelwalzeneinheit 3 eine Walzeneinheit 38 als Reifenpacker oder als Grubberwalzeneinheit zur Tiefenführung vorgesehen, die hydraulisch und/oder mechanisch höhenverstellbar ist. Eine Verstelleinheit 39 dient zur mechanischen Verstellung in verschiedenen Höhenstufen. Gegenüber der Walzeneinheit 38 ist die Striegelwalzeneinheit 3 gesondert durch eine hydraulische Verstelleinheit 40 höhenverstellbar.

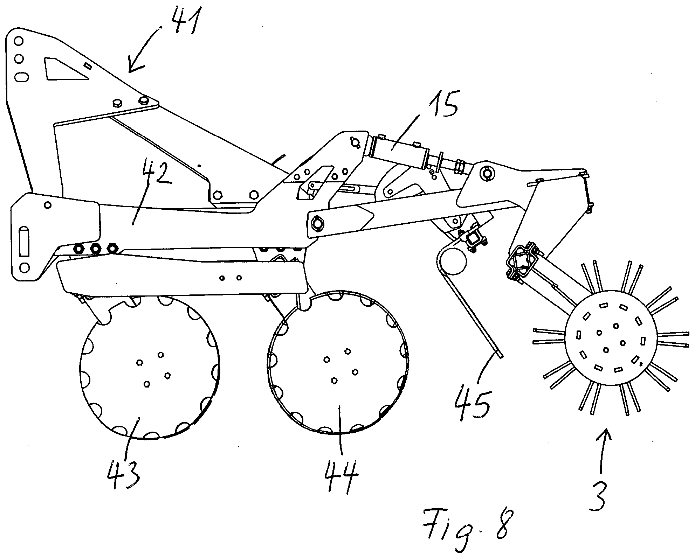

Ein anderes, mit einem Dreipunktanbau 41 ausgestattetes Bodenbearbeitungsgerät (Fig. 8) mit einem Grundrahmen 42 auf. An diesem sind zwei Reihen Scheibenelemente 43, 44 zur Bodenbearbeitung auf. Als Nachlaufeinrichtung ist die Striegelwalzeneinheit 3 angeordnet, die hydraulisch mittels der Verstelleinheit 15 gegenüber dem Grundrahmen 42 höhenverstellbar ist. Zwischen der hinteren Reihe 43 der Scheibenelemente und der Striegelwalzeneinheit 3 ist eine Reihe vom Prallstriegeln 45 vorgesehen.

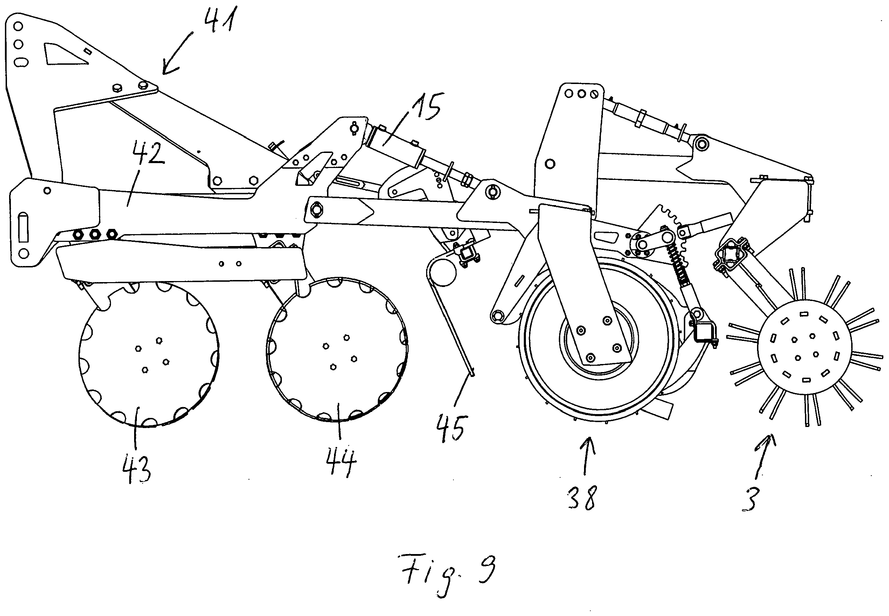

In einer weiteren Ausführungsform (Fig. 9) des Bodenbearbeitungsgeräts ist zusätzlich zu den in Fig. 8 dargestellten Anordnungen zur Bodenbearbeitung eine Walzeneinheit 38 als Reifenpacker zur Tiefenführung vorgesehen, die hydraulisch und/oder mechanisch höhenverstellbar ist.

## Patentansprüche

1. Bodenbearbeitungsgerät mit wenigstens einer Striegelwalzeneinheit (3), **dadurch gekennzeichnet, dass** zur flächigen zerkrümelnden Bodenbearbeitung der wenigstens einen Striegelwalzeneinheit (3) wenigstens eine Grubbereinheit mit einer Reihe sich drehender, scheibenförmiger Elemente (2; 43, 44) in Bearbeitungsrichtung vorgeordnet ist.

2. Bodenbearbeitungsgerät nach Anspruch 1, **dadurch gekennzeichnet, dass** die scheibenförmigen Elemente (2; 43, 44) als Einebnungswerkzeuge dienen.

3. Bodenbearbeitungsgerät nach Anspruch 1 oder 2, **dadurch gekennzeichnet, dass** die scheibenförmigen Elemente als Walzen, insbesondere als Grubberwalzen, Packerwalzen (38), als Sternverteiler (2) oder als Hohlscheiben, ausgebildet sind.

4. Bodenbearbeitungsgerät nach einem der Ansprüche 1 bis 3, **dadurch gekennzeichnet, dass** der wenigstens einer Striegelwalzeneinheit (3) eine Prallstriegeleinheit (45) vorgeordnet ist.

5. Bodenbearbeitungsgerät nach Anspruch 4, **dadurch gekennzeichnet, dass** die Prallstriegeleinheit (45) zwischen der wenigstens einen Reihe sich drehender, scheibenförmiger Elemente (2; 43, 44) und der wenigstens einen Striegelwalzeneinheit (3) angeordnet ist.

6. Bodenbearbeitungsgerät nach Anspruch 4 oder 5, **dadurch gekennzeichnet, dass** die Prallstriegeleinheit (45) zwischen der wenigstens einen Reihe sich drehender, scheibenförmiger Elemente (2; 43, 44) und einer weiteren Reihe sich drehender scheibenförmigen Elemente, insbesondere von Grubberwalzen oder Packerwalzen (38), angeordnet ist.

7. Bodenbearbeitungsgerät nach einem der Ansprüche 1 bis 6, **dadurch gekennzeichnet, dass** der wenigstens einen Striegelwalzeneinheit (3), wenigstens ein Zinkengerät, insbesondere zwei Reihen Zinkenschare, vorgeordnet sind.

8. Bodenbearbeitungsgerät nach Anspruch 7, **dadurch gekennzeichnet, dass** zwischen den wenigstens zwei Reihen der Zinkenschare und der wenigstens einen Striegelwalzeneinheit wenigstens eine Reihe sich drehender scheibenförmigen Elemente, insbesondere von Grubberwalzen oder Packerwalzen, angeordnet ist.

9. Bodenbearbeitungsgerät nach einem der Ansprüche 1 bis 8, **dadurch gekennzeichnet, dass** die scheibenförmigen Elemente und/oder die wenigstens eine Striegelwalzeneinheit (3) und/oder die Prallstriegeleinheit (45) und/oder die Zinkenschare mechanisch oder hydraulisch tiefenverstellbar sind.

10. Bodenbearbeitungsgerät nach einem der Ansprüche 1 bis 9, **dadurch gekennzeichnet, dass** die Striegelwalzeneinheit (3) Striegelwalzen (30) umfasst, deren Striegel von Wendelfedern (35), Gummifedern, Drehstabfedern, Spiralfedern, Blattfedern gebildet oder in anderer Weise als elastische Bauelemente ausgebildet sind.

11. Bodenbearbeitungsgerät nach Anspruch 10, **dadurch gekennzeichnet, dass** die freien Enden der Wendelfedern (35) sich in im Wesentlichen radialer Richtung erstreckende Zinken (36) sind.

12. Bodenbearbeitungsgerät nach einem der Ansprüche 1 bis 11, **dadurch gekennzeichnet, dass** die wenigstens eine Striegelwalzeneinheit durch seitlich angeordnete, insbesondere federnd gelagerte, Stützräder abgestützt ist.

13. Bodenbearbeitungsgerät nach einem der Ansprüche 1 bis 12, **dadurch gekennzeichnet, dass** die Striegelwalzeneinheit (3) als ganze oder die einzelnen Striegelwalzen (30) gegenüber dem Tragrahmen oder dem Querträger (18) elastisch gelagert ist.

## Claims

1. Soil working tool with at least one harrow roller unit (3), **characterised in that** at least one cultivator unit with a row of rotating disc-shaped elements (2; 43, 44) is arranged in front of the at least one harrow roller unit (3) in the working direction for the purpose of surface crumbling soil working.

2. Soil working tool according to claim 1, **characterised in that** the disc-shaped elements (2; 43, 44) serve as levelling tools.

3. Soil working tool according to claim 1 or 2, **characterised in that** the disc-shaped elements are designed as rollers, in particular as cultivator rollers, as packer rollers (38), as star distributors (2) or as hollow discs.

4. Soil working tool according to any of claims 1 to 3, **characterised in that** an impact harrow unit (45) is arranged upstream of the at least one harrow roller unit (3).

5. Soil working tool according to claim 4, **characterised in that** the impact harrow unit (45) is arranged between the at least one row of rotating disc-shaped elements (2; 43, 44) and the at least one harrow roller unit (3).

6. Soil working tool according to claim 4 or 5, **characterised in that** the impact harrow unit (45) is arranged between the at least one row of rotating disc-shaped elements (2; 43, 44) and a further row of rotating disc-shaped elements, in particular cultivator rollers or packer rollers (38).

7. Soil working tool according to any of claims 1 to 6, **characterised in that** at least one tine implement, in particular two rows of tine shares, are arranged upstream of the at least one harrow roller unit (3).

8. Soil working tool according to claim 7, **characterised in that** between the at least two rows of tine shares and the at least one harrow roller unit at least one row of rotating disc-shaped elements, in particular of cultivator rollers or packer rollers, is arranged.

9. Soil working tool according to any of claims 1 to 8, **characterised in that** the disc-shaped elements and/or the at least one harrow roller unit (3) and/or the impact harrow unit (45) and/or the tine shares are mechanically or hydraulically depth-adjustable.

10. Soil working tool according to any of claims 1 to 9, **characterised in that** the harrow roller unit (3) comprises harrow rollers (30), the harrows of which are formed by helical springs (35), rubber springs, torsion bar springs, spiral springs, leaf springs or are otherwise formed as elastic structural elements.

11. Soil working tool according to claim 10, **characterised in that** the free ends of the helical springs (35) are tines (36) extending in a substantially radial direction.

12. Soil working tool according to any of claims 1 to 11, **characterised in that** the at least one harrow roller unit is supported by laterally arranged, in particular resiliently mounted, support wheels.

13. Soil working tool according to any of the claims 1 to 12, **characterised in that** the harrow roller unit (3) as a whole or the individual harrow rollers (30) is elastically mounted relative to the supporting frame or the cross member (18).

## Revendications

1. Appareil de traitement du sol pourvu d'au moins une unité de rouleaux d'étrillage (3), **caractérisé en ce qu'**au moins une unité de cultivateur pourvue d'une rangée d'éléments rotatifs en forme de disques (2; 43, 44) est disposée en amont de l'au moins une unité de rouleau d'étrillage (3), dans la direction du traitement, pour le traitement du sol par émiettage à plat.

2. Appareil de traitement du sol selon la revendication 1, **caractérisé en ce que** les éléments en forme de disque (2 ; 43, 44) servent d'outils de nivellement.

3. Appareil de traitement du sol selon la revendication 1 ou 2, **caractérisé en ce que** les éléments en forme de disque sont conçus comme des rouleaux, en particulier comme des rouleaux de cultivateur, des rouleaux de conditionnement (38), comme des distributeurs en étoile (2) ou comme des disques creux.

4. Appareil de traitement du sol selon l'une des revendications 1 à 3, **caractérisé en ce qu'**une unité d'étrillage à impact (45) est disposée en amont de l'au moins une unité de rouleaux d'étrillage (3).

5. Appareil de traitement du sol selon la revendication 4, **caractérisé en ce que** l'unité d'étrillage à impact (45) est disposée entre la au moins une rangée d'éléments en forme de disque rotatif (2; 43, 44) et la au moins une unité de rouleaux d'étrillage (3).

6. Appareil de traitement du sol selon la revendication 4 ou 5, **caractérisé en ce que** l'unité d'étrillage à impact (45) est disposée entre la au moins une rangée d'éléments en forme de disque rotatif (2 ; 43, 44) et une autre rangée d'éléments en forme de disque rotatif, en particulier des rouleaux de cultivateur ou des rouleaux de conditionnement (38).

7. Appareil de traitement du sol selon l'une des revendications 1 à 6, **caractérisé en ce qu'**au moins une unité de rouleaux d'étrillage (3) est précédée d'au moins un outil à dents, en particulier de deux rangées de socs à dents.

8. Appareil de traitement du sol selon la revendication 7, **caractérisé en ce qu'**au moins une rangée d'éléments rotatifs en forme de disque, notamment des rouleaux de cultivateur ou des rouleaux de conditionnement, est disposée entre les au moins deux rangées de socs à dents et l'au moins une unité de rouleaux d'étrillage.

9. Appareil de traitement du sol selon l'une des revendications 1 à 8, **caractérisé en ce que** les éléments en forme de disque et/ou l'au moins une unité de rouleaux d'étrillage (3) et/ou l'unité d'étrillage à impact (45) et/ou les socs de dents sont réglables en profondeur mécaniquement ou hydrauliquement.

10. Appareil de traitement du sol selon l'une des revendications 1 à 9, **caractérisé en ce que** l'unité de rouleaux d'étrillage (3) comprend des rouleaux d'étrillage (30), dont les étrilles sont formées par des ressorts hélicoïdaux (35), des ressorts en caoutchouc, des ressorts à barre de torsion, des ressorts en spirale, des ressorts à lame ou sont autrement formées comme éléments structurels élastiques.

11. Appareil de traitement du sol selon la revendication 10, **caractérisé en ce que** les extrémités libres des ressorts hélicoïdaux (35) sont des dents (36) s'étendant dans une direction essentiellement radiale.

12. Appareil de traitement du sol selon l'une quelconque des revendications 1 à 11, **caractérisé en ce que** l'au moins une unité de rouleaux d'étrillage est supportée par des roues de support disposées latéralement, en particulier montées de manière élastique.

13. Appareil de traitement du sol selon l'une des revendications 1 à 12, **caractérisée en ce que** l'ensemble des rouleaux de la étrillage (3) ou les rouleaux individuels de la étrillage (30) sont montés de manière élastique par rapport au cadre porteur ou à la traverse (18).
